# EUROPEAN PATENT APPLICATION

(11) **EP 4 169 817 A1**
(43) Date of publication of application: **26.04.2023**
(21) Application number: 22191758.6
(22) Date of filing: 23.08.2022
(51) Int. Cl.: B62D 55/065, B62D 55/10, B62D 55/112, B62D 55/116

(54) **HEIGHT-ADJUSTABLE TRACK DRIVE SYSTEMS AND RELATED AGRICULTURAL VEHICLES AND METHODS**

(30) Priority: 21.10.2021 US 202163262828 P
(71) Applicant: Agco Corporation, Duluth, Georgia 30096 (US)
(72) Inventor: Anderson, Joseph Paul, Hesston (US)
(74) Representative: AGCO Intellectual Property Department

(57) **Abstract**

A height-adjustable track drive system (200) for an agricultural vehicle includes a support frame (204) having four fixed-length links (208a-208d). Each link is rotatably coupled to two adjacent of the links (208a-208d) at pivot points (210a-210d). Four wheels (202a-202d) are connected to the support frame, and each wheel is connected to the support frame at one of the pivot points (210a-210d). A hydraulic cylinder (212) connects two nonadjacent pivot points (210b, 210d) of the support frame. An endless track (206) rollably contacts each of the four wheels, and one of the wheels includes a drive wheel (202a) configured to be connected to a chassis of the agricultural vehicle. Related agricultural vehicles and methods are also disclosed.

## Description

### FIELD

Embodiments of the present disclosure relate to mobile machines, such as self-propelled agricultural sprayers and similar agricultural vehicles.

### BACKGROUND

Some agricultural vehicles are configured to be operated in fields among row crops. Application machines such as self-propelled sprayers, for example, may have wheels or endless tracks configured to pass between crop rows and a spray boom that extends outwardly from the agricultural vehicle to spray the crop as the machine travels through the field. To avoid damaging the crops as the agricultural vehicle moves through the field, each of the wheels or tracks must have the proper width to travel between the rows, and the track width-the lateral distance between opposite wheels or tracks-must match row spacing so that the wheels or tracks are properly positioned between crop rows. Furthermore, the agricultural vehicle should have sufficient ground clearance (the distance between the agricultural vehicle body and the surface over which it moves) to clear the crops.

U.S. Patent 9,180,747, "System and Method of Adjusting the Chassis Height of a Machine," granted November 10, 2015, discloses a self-propelled sprayer having a chassis-height adjustment system wherein four wheel support assemblies are configured to selectively raise and lower the chassis relative to the ground surface by actuators. Adjustment of the chassis height in such systems is commanded by an operator through user interface elements. The operator may thus raise and lower the chassis as required. For example, during filling, on the highway, or in crop fields with short crops, a low ground clearance may be selected. Conversely, for operating in taller crops, a higher ground clearance may be selected. In general, during operation in crop fields, selecting the lowest possible chassis height that avoids damaging the crop canopy is desirable to maintain the center of mass as low as possible for stability, as well as to ensure the material is applied properly (*e*.*g*., to avoid drift due to wind, *etc.*).

### BRIEF SUMMARY

One embodiment includes a height-adjustable track drive system for an agricultural vehicle. The system includes a support frame having four fixed-length links, each link rotatably coupled to two adjacent links at pivot points. Four wheels are connected to the support frame, and each wheel is connected to the support frame at one of the pivot points. A hydraulic cylinder connects nonadjacent pivot points of the support frame. An endless track rollably contacts each of the four wheels, and one of the wheels includes a drive wheel configured to be connected to a chassis of the agricultural vehicle.

The hydraulic cylinder may be connected to two of the wheels adjacent the drive wheel, and may be configured to change a shape of the support frame. The hydraulic cylinder may be configured to change a height of the drive wheel relative to two others of the wheels.

The track drive system may include one or more idler wheels connected to one of the links between two of the pivot points. The idler wheel(s) may be configured to move vertically between a ground surface and the link to which the idler wheel(s) is/are connected.

In some embodiments, an agricultural vehicle includes a chassis and a plurality of track drive systems.

The agricultural vehicle may also include a plurality of adjustable axles configured to change a lateral distance from the chassis to each of the track drive systems.

The agricultural vehicle may also include a controller configured to adjust positions of each of the hydraulic cylinders. The controller may be configured to adjust the positions of the hydraulic cylinders after receiving a command from a user. The agricultural vehicle may also include a user interface for allowing the user to send the command to the controller.

The agricultural vehicle may include an application system carried by the chassis. The application system includes a liquid holding tank and a plurality of nozzles spaced along a laterally extending applicator boom. The nozzles are configured to deliver liquid from the liquid holding tank to the ground surface.

The hydraulic cylinders may each connect to a common fluid source via a respective control valve.

A method of operating an agricultural vehicle includes changing a length of each of the hydraulic cylinders of the track drive systems to change a shape of each of the support frames and change a height of the chassis relative to a ground surface.

In some embodiments, the lengths of each of the hydraulic cylinders may be changed at the same rate. The length of each of the hydraulic cylinders may be changed by providing hydraulic fluid to each of the hydraulic cylinders.

Within the scope of this application it should be understood that the various aspects, embodiments, examples, and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a perspective view of an agricultural applicator constructed and operable in accordance with principles disclosed herein;
FIG. 2 is a simplified side profile illustrating an endless track system;
FIG. 3 is a simplified side profile of the endless track system of FIG. 2 adjusted to support a chassis at a different height;
FIG. 4 is a perspective view of the agricultural applicator shown in FIG. 1 when the endless track systems are in the configuration shown in FIG. 3; and
FIG. 5A, FIG. 5B, and FIG. 5C are block diagrams of various exemplary embodiments of control systems of the applicator of FIG. 1.

### DETAILED DESCRIPTION

The illustrations presented herein are not actual views of any agricultural vehicle or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

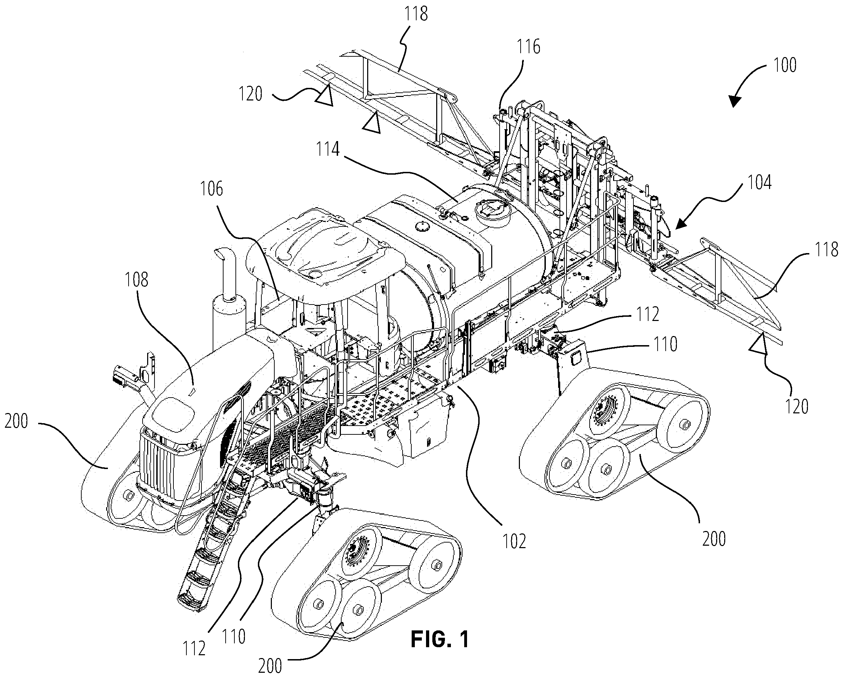

FIG. 1 illustrates an agricultural vehicle 100 having an adjustable chassis height. In particular, the agricultural vehicle 100 is pictured as an agricultural material applicator including a chassis 102, an application system 104, a plurality of track drive systems 200 supporting the chassis 102 above a ground surface, an operator cabin 106, and an engine compartment 108. A plurality of support assemblies 110 and axles 112 interposed between the track drive systems 200 and the chassis 102 support the chassis 102 on the track drive systems 200 and may provide suspension and/or steering functions, as discussed in U.S. Patent 9,180,747, "System and Method of Adjusting the Chassis Height of a Machine," granted November 10, 2015. The axles 112 may be telescoping to enable the agricultural vehicle 100 to have different lateral distances between the track drive systems 200, which is useful to accommodate operations in fields having different distances between row crops (*i.e.*, such that the track drive systems 200 can each travel in between rows). For example, U.S. Patent Application Publication 2020/0130741, "Mounting Assembly for a Steerable Wheel with Variable Track Width," published April 30, 2020, discloses an example of a telescopic axle with an actuator disposed inside an outer axle and arranged to drive the inner axle inward and outward to shift the lateral position of the associated suspension and wheel.

The support assembly 110 interposed between each of the track drive systems 200 and the chassis 102 may connect to one of the track drive systems 200 and to one of the axles 112, such that the track drive system 200 and the support assembly 110 shift laterally as a single unit relative to the chassis 102 when the axle 112 extends or retracts to adjust the track width of the agricultural vehicle 100. The support assemblies 110 may optionally include height adjustment components for raising and lowering the chassis 102 between various operating positions. One or more of the support assemblies 110 (or portions thereof) may be selectively pivotable relative to the chassis 102 to steer the agricultural vehicle 100.

The application system 104 is supported on the chassis 102 and may be configured for distributing liquids or solids, such as nutrients, herbicides, pesticides, fungicides, *etc.* In the illustrated embodiment, the application system 104 includes a liquid holding tank 114 and a delivery system 116 for applying a liquid from the liquid holding tank 114 to a crop or field. The liquid holding tank 114 may have a capacity of between 200 gallons (757 I) and 2,000 gallons (7,570 I) and, more specifically, may have a capacity of 700 gallons (2,650 I), 900 gallons (3,410 I), 1,100 gallons (4,160 I), or 1,300 gallons (4,920 I). The delivery system 116 includes a laterally extending applicator boom 118 supporting hoses, pumps, and spray nozzles or similar components for dispersing or otherwise delivering the contents of the liquid holding tank 114 to a crop. Alternatively, the application system 104 may be configured to apply dry (*i.e.*, solid) particulate material to a field and therefore may include a solid product hopper and a solid material spreader for dispersing particulate material from the solid product hopper, such as a pneumatic spreader or one or more spinners.

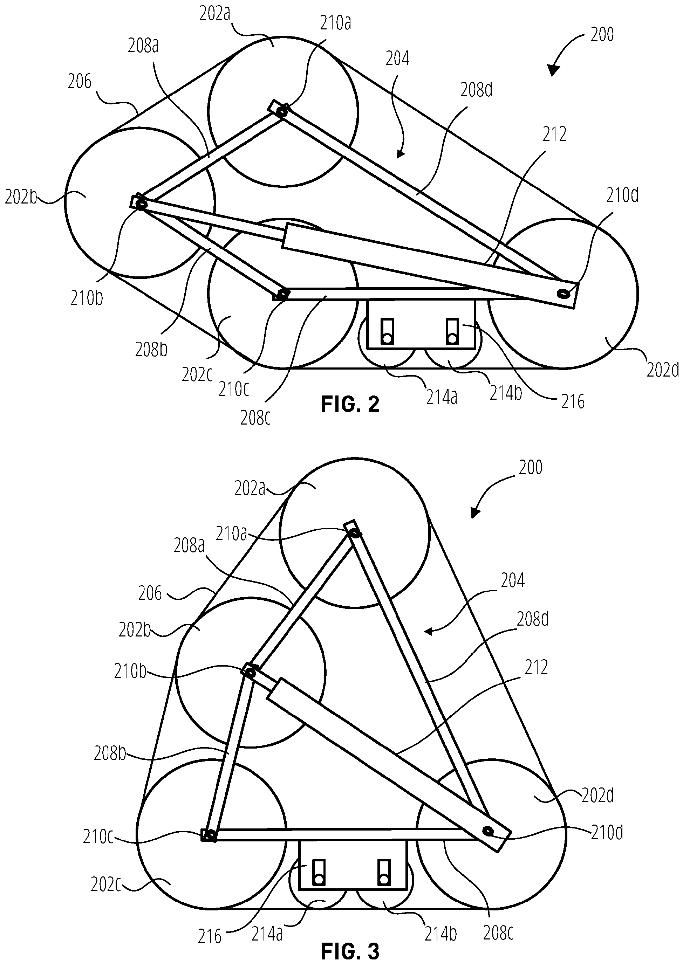

FIG. 2 is a simplified side view of one of the track drive systems 200 of the agricultural vehicle 100. The track drive system 200 includes four wheels 202a, 202b, 202c, and 202d connected to a support frame 204. An endless track 206 is in rollable contact with and configured to travel around the wheels 202a-202d, and may be driven by one or more of the wheels 202a-202d. The endless tracks 206 of the track drive system 200 move the agricultural vehicle 100 forward or backward in the field. Track drive systems 200 may have greater contact surface area than round tires, and therefore may exert less pressure on soil than round tires for a given vehicle weight.

The support frame 204 includes four links 208a 208b, 208c, and 208d. The links 208a-208d may each exhibit fixed lengths, and may be in the form of metal beams (*e*.*g*., steel) or other selected structure. Each link 208a-208d is rotatably coupled to two adjacent links 208a-208d at pivot points 210a, 210b, 210c, and 210d. For example, link 208a is connected to link 208b at pivot point 210b, and to link 208d at pivot point 210a. The links 208a, 208b are depicted as relatively shorter than the links 208c, 208d, but other configurations are also possible.

The pivot points 210a-210d enable the links 208a-208d to move relative to one another, which allows the support frame 204 to change shape. The shape of the support frame 204 affects the height of the chassis 102 of the agricultural vehicle 100 (FIG. 1), as explained in more detail below. The support frame 204 includes a hydraulic cylinder 212 connecting two nonadjacent pivot points 210b, 210d, and therefore, two nonadjacent wheels 202b, 202d. The hydraulic cylinder 212 controls the shape of the support frame 204.

The link 208c may optionally carry one or more idler wheels 214a, 214b between the pivot points 210c, 210d to improve contact between the endless track 206 and the ground. The idler wheels 214a, 214b may have a smaller diameter than the wheels 202c, 202d mounted at the pivot points 210c, 210d. The idler wheels 214a, 214b may be connected to an idler wheel bracket 216 carried by the link 208c. The idler wheel bracket 216 may be configured to provide suspension to the idler wheels 214a, 214b (*e*.*g*., via springs). That is, the idler wheels 214a, 214b may be configured to move vertically between the ground surface and the link 208c.

Alternatively, the idler wheel bracket 216 may have support the idler wheel 214a, 214b at fixed positions (*i*.*e*., the idler wheel 214a, 214b may rotate but not move up or down relative to the idler wheel bracket 216). As another alternative, if the idler wheels 214a, 214b are the same diameter as the wheels 202c, 202d, the idler wheel bracket 216 may be omitted, and the idler wheels 214a, 214b may connect directly to pivot points on the link 208c.

FIG. 3 is a simplified side view of the track drive system 200 when the hydraulic cylinder 212 is in a different position. The hydraulic cylinder 212 is extended in the position shown in FIG. 2, and retracted in the position shown in FIG. 3. The shape of the support frame 204 changes accordingly.

The wheels 202c, 202d are configured to travel over the ground, and the link 208c may generally be oriented parallel to the ground surface if the wheels 202c, 202d are the same size. The links 208a, 208b, 208d change their positions based on the extension or retraction of the hydraulic cylinder 212. Thus, in the configurations shown in FIG. 2 and FIG. 3, the wheels 202c, 202d and the link 208c are in the same positions; the wheels 202a, 202b, the links 208a, 208b, 208d, and the hydraulic cylinder 212 are in different positions.

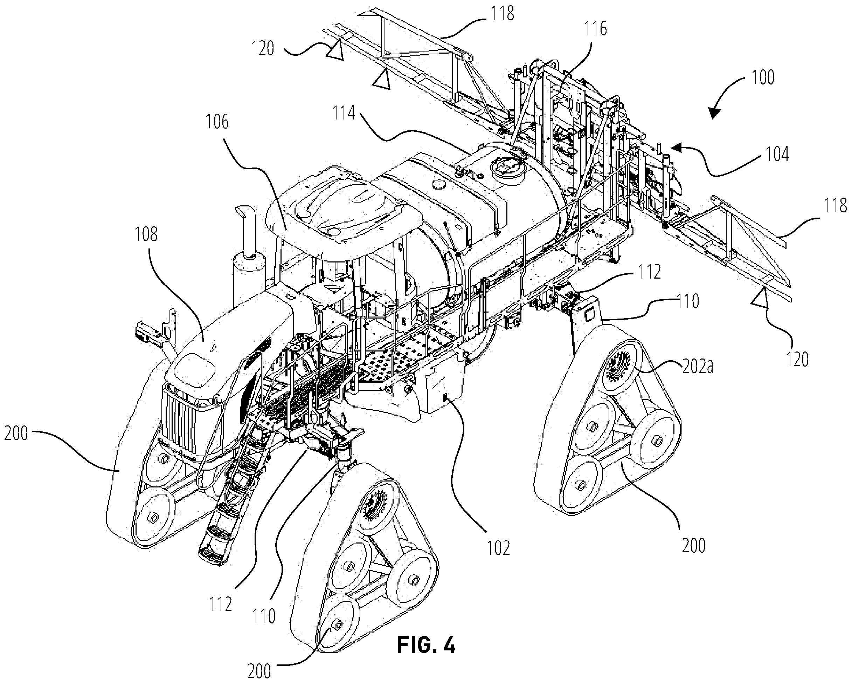

FIG. 4 illustrates the agricultural vehicle 100 when the track drive systems 200 are in the position shown in FIG. 3. The chassis 102 of the agricultural vehicle 100 may be coupled to the track drive systems 200 at the pivot points 210a, and thus, the height of the chassis 102 is higher when the track drive systems 200 are configuration shown in FIG. 3. As shown, the chassis 102 has a higher ground clearance than it does in FIG. 1. Thus, the agricultural vehicle 100 in the configuration shown in FIG. 4 may be used to apply material to crops that are relatively taller, without damaging the crops. The support frame 204 may be in a "diamond" shape as shown in FIG. 2, or in approximately a triangle shape as shown in FIG. 3. In particular, if the links 208a, 208b are together approximately the same length as the link 208d, the configuration shown in FIG. 3 may provide a stable yet relatively high pivot point 210a to support the chassis 102.

One or more of the wheels 202a of the track drive systems 200 may be drive wheels, and may be powered by the engine of the agricultural vehicle 100. For example, the wheels 202a of the rear track drive systems 200 may be powered by the engine, or all four of the wheels 202a (i.e., the wheel 202a of each track drive system 200) may be powered by the engine. The wheels 202b-202d may be idler wheels (*i*.*e*., non-driven wheels), which are configured to route the endless track 206 and keep the endless track 206 in tension.

The track drive systems 200 may be used to retrofit agricultural vehicles supported by ground-contacting wheels (*e*.*g*., vehicles as shown and described in U.S. Patent 8,376,078, "Agricultural Application Machine with Variable Width Track," granted February 19, 2013). For example, the wheels of a conventional vehicle may be removed and replaced by the track drive systems 200. The wheels 202a of the track drive systems 200 may be driven by the same mechanism used to drive the hubs of the wheels removed from the conventional vehicle. The track drive systems 200 may have advantages of lower ground pressure (due to a larger ground contact area than the conventional wheels) and the ability to raise and lower the chassis. Thus, the track drive systems 200 may convert a vehicle that does not have height adjustment to one that does, enabling additional functionality.

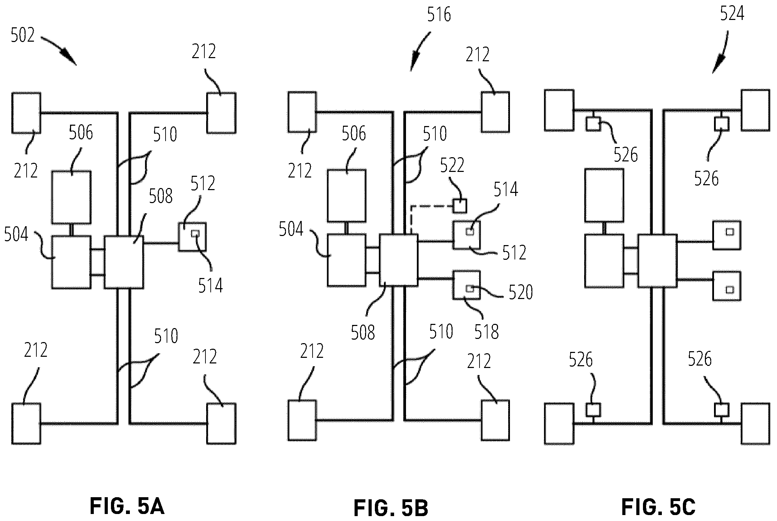

FIG. 5A illustrates an exemplary hydraulic control system 502 for operating the hydraulic cylinders 212 of the track drive systems 200, in which a common fluid source, such as a centralized hydraulic pump 504 driven by an internal combustion engine 506 (*e*.*g*., the engine of the agricultural vehicle 100) or another power source, communicates pressurized hydraulic fluid to a hydraulic controller 508 that regulates fluid flow between the hydraulic pump 504 and the hydraulic cylinders 212 via a plurality of hydraulic transfer lines 510. The hydraulic controller 508 may include, for example, a hydraulic manifold or similar device.

In some embodiments, one or more of the support assemblies 110 may include actuators for adjusting a height of the chassis 102 (in addition to the height adjustment that the track drive systems 200 can perform by changing the shapes of the support frames 204), for steering the associated track drive system 200, or both. In some embodiments, the actuators are hydraulic actuators such as linear or rotary hydraulic actuators.

Each of the hydraulic transfer lines 510 communicates hydraulic power between the hydraulic controller 508 and one or more hydraulic cylinders 212 and, thus, may include one or more hydraulic pressure lines and one or more hydraulic return lines. Each of the hydraulic transfer lines 510 may communicate hydraulic power to more than one hydraulic cylinder 212, and each of the hydraulic cylinders 212 may include a group of actuators associated with each track drive system 200 and/or support assembly 110. By way of example, a first hydraulic cylinder may drive steering of a track drive system 200, a second hydraulic cylinder may drive rotation of the wheel 202a, and a third hydraulic cylinder 212 may adjust a height of the chassis 102 by changing the shape of the support frame 204. It will be appreciated that the hydraulic cylinders are exemplary in nature and that the various hydraulic cylinders may not be grouped as described herein.

The hydraulic control system 502 includes a control interface 512 in communication with the hydraulic controller 508. The control interface 512 may be part of a user interface that includes one or more physical or virtual user interface elements 514, such as buttons, switches, or dials, and may be part of a control environment in the operator cabin 106 (FIG. 1).

Though the hydraulic cylinders 212 are illustrated and described herein as hydraulic actuators, it will be understood that other types of actuators may be used in place of, or in connection with, the hydraulic cylinders 212. By way of example, electro-mechanical actuators may be used in place of at least some of the hydraulic cylinders 212 illustrated and discussed herein.

FIG. 5B illustrates another exemplary control system 516 similar to the hydraulic control system 502, but that includes a computerized controller 518 with a control module 520 for controlling the hydraulic controller 508. The control system 516 may also include a wireless interface element 522 in wireless communication with the hydraulic controller 508 to enable a user to remotely control the hydraulic cylinders 212. The wireless interface element 522 may be a dedicated device, such as a device similar to a key-fob commonly used with cars and other agricultural vehicles, or a computing device such as smart phone, tablet computer, or wearable computing device programmed or configured for use with the control system 516. The wireless interface element 522 may be configured to communicate with the hydraulic controller 508 and/or the computerized controller 518 via short-range wireless communications, such as Wi-Fi or Bluetooth, or via a communications network such as a cellular network.

The controller 518 may include one or more integrated circuits programmed or configured to control the hydraulic controller 508 to actuate the hydraulic cylinders 212. By way of example, the controller 518 may include one or more general purpose microprocessors or microcontrollers, programmable logic devices, or application specific integrated circuits. The controller 518 may also include one or more discrete and/or analog circuit components operating in conjunction with the one or more integrated circuits, and may include or have access to one or more memory or storage elements operable to store executable instructions, data, or both. The control module 520 may be a hardware or software module specifically dedicated to enabling the controller 518 to control the hydraulic controller 508.

Another control system 524, illustrated in FIG. 5C, is similar to the control system 516, but includes additional hydraulic circuit components, such as hydraulic accumulators 526. In some embodiments, each of the track drive systems 200 may include a single hydraulic cylinder 212 that both raises and lowers the chassis 102 and provides suspension functions. Such hydraulic systems may require specialized hydraulic circuit components such as the hydraulic accumulators 526.

All references cited herein are incorporated herein in their entireties. If there is a conflict between definitions herein and in an incorporated reference, the definition herein shall control.

## Claims

1. A height-adjustable track drive system for an agricultural vehicle, the system comprising:
a support frame comprising four fixed-length links, each link rotatably coupled to two adjacent links at pivot points;
four wheels connected to the support frame, wherein each wheel is connected to the support frame at one of the pivot points;
a hydraulic cylinder connecting nonadjacent pivot points of the support frame; and
an endless track rollably contacting each of the four wheels;
wherein one of the wheels comprises a drive wheel configured to be connected to a chassis of the agricultural vehicle.

2. The height-adjustable track drive system of claim 1, wherein the hydraulic cylinder is connected to two of the wheels adjacent the drive wheel.

3. The height-adjustable track drive system of claim 1 or 2, wherein the hydraulic cylinder is configured to change a shape of the support frame.

4. The height-adjustable track drive system of claim 3, wherein the hydraulic cylinder is configured to change a height of the drive wheel relative to two others of the wheels.

5. The height-adjustable track drive system of any one of claims 1 to 4, further comprising at least one idler wheel connected to one of the links between two of the pivot points.

6. The height-adjustable track drive system of claim 5, wherein the at least one idler wheel is configured to move vertically between a ground surface and the link to which the at least one idler wheel is connected.

7. An agricultural vehicle comprising:
a chassis; and
a plurality of track drive systems according to any one of claims 1 to 4.

8. The agricultural vehicle of claim 7, further comprising a plurality of adjustable axles configured to change a lateral distance from the chassis to each of the track drive systems.

9. The agricultural vehicle of claim 7 or 8, further comprising a controller configured to adjust positions of each of the hydraulic cylinders.

10. The agricultural vehicle of claim 9, wherein the controller is configured to adjust the positions of the hydraulic cylinders after receiving a command from a user.

11. The agricultural vehicle of claim 10, further comprising a user interface for allowing the user to send the command to the controller.

12. The agricultural vehicle of any one of claims 7 to 11, further comprising:
an application system carried by the chassis, the application system comprising:
a liquid holding tank; and
a plurality of nozzles spaced along a laterally extending applicator boom, wherein the nozzles are configured to deliver liquid from the liquid holding tank to the ground surface.

13. The agricultural vehicle of any one of claims 7 to 12, wherein the hydraulic cylinders are each connected to a common fluid source via a respective control valve.

14. A method of operating the agricultural vehicle of any one of claims 7 to 13, the method comprising:
changing a length of each of the hydraulic cylinders of the track drive systems to change a shape of each of the support frames and change a height of the chassis relative to a ground surface.

15. The method of claim 14, wherein changing a length of each of the hydraulic cylinders comprises changing the lengths of each of the hydraulic cylinders at a same rate.

16. The method of claim 14 or 15, wherein changing a length of each of the hydraulic cylinders comprises providing hydraulic fluid to each of the hydraulic cylinders.
